# EUROPÄISCHE PATENTANMELDUNG

(11) **EP 2 429 048 A2**
(43) Veröffentlichungstag der Anmeldung: **14.03.2012**
(21) Anmeldenummer: 11179037.4
(22) Anmeldetag: 26.08.2011
(51) Int. Cl.: H02B 13/065

(54) **Überwachungs- und Schutzsystem für eine Mittel- oder Niederspannungsschaltanlage und Verfahren zum Betrieb derselben**

(30) Priorität: 10.09.2010 DE 102010044922
(71) Anmelder: KÖHL AG, 6868 Wecker (LU)
(72) Erfinder: Köhl, Wilfried, 54296 Trier (DE); Becker, Diethard, 66663 Merzing-Schwemlingen (DE); Wichterich, Dirk, 54329 Konz (DE)
(74) Vertreter: Grosse, Felix Christopher

(57) **Zusammenfassung**

Die vorliegende Erfindung betrifft ein Überwachungs- und Schutzsystem zum Einsatz in elektrotechnischen Anlagen (1), insbesondere in Nieder- und Mittelspannungsschaltanlagen, und ein Verfahren zum Betrieb desselben wobei die Anlage (1) wenigstens ein Schaltfeld (2, 21, 22) mit wenigstens einer Sammelschiene (3) aufweist. Die Erfindung zeichnet sich dadurch aus, dass das Überwachungs- und Schutzsystem mindestens einen dem Schaltfeld (2, 21, 22) zugeordneten Sensor (6), vorzugsweise eine Mehrzahl an Sensoren (6), zur Erfassung der elektrischen und/ oder nicht-elektrischen Parameter des Schaltfelds (2, 21, 22) der elektrotechnischen Anlage (1) aufweist. Ferner weist das Überwachungs- und Schutzsystem eine dem Schaltfeld (2, 21 ,22) oder der elektrotechnischen Anlage (1) zugeordnete und mit dem Sensor (6) verbundene Auswerteeinheit (5) zur Verarbeitung der erfassten elektrischen und/ oder nicht-elektrischen Parameter, ein dem Schaltfeld (2, 21, 22) oder der elektrotechnischen Anlage (1) zugeordnetes und mit der Auswerteeinheit (5) verbundenes Schaltgerät (4), und einen dem Schaltfeld (2, 21, 22) oder der elektrotechnischen Anlage (1) zugeordneten und mit der Auswerteeinheit (5) verbundenen Schnellschalter (8) auf.

## Beschreibung

Die vorllegende Erfindung betrifft ein Überwachungs- und Schutzsystem für elektrotechnische Anlagen, insbesondere für Mittel- oder Niederspannungsschaltanlagen mit wenigstens einem Schaltfeld, einem Schaltgerät, mindestens einem Sensor, einer Auswerteeinheit und einem kurzfristig reagierenden Schaltgerät, im Folgenden als Schnellschalter bezeichnet, sowie ein Verfahren zum Betrieb derselben.

Als Niederspannung wird generell der Bereich bis einschließlich 1 kV bei Wechselspannung bzw. bis einschließlich 1,5 kV bei Gleichspannung angesehen. Mittelspannung umfasst Im Allgemeinen einen Bereich zwischen 1 kV und 60 kV bei Wechselspannung. Zur Handhabung dieser Spannungen werden entsprechende Nieder- bzw. Mittelspannungssrhaltanlagen eingesetzt, Solche Anlagen weisen wenigstens ein Schaltfeld auf, in dem sich vorzugsweise mindestens eine Sammelschiene sowie mindestens ein Schaltgerät befinden. Eine Sammelschiene ist eine Leiteranordnung, an welche alle ankommenden und abgehenden Leitungen der Nieder- bzw. Mittelspannungsschaltanlage angeschlossen sind. Neben Leitungen können auch Kabel oder Stromschlenen bzw. -verteiler an die Nieder- bzw. Mittelspannungsschaltanlage angeschlossen werden. Im Folgenden wird hierfür insgesamt der Begriff Leitungen verwendet, Mithin kann eine Sammelschiene also zentraler Verteiler von elektrischer Energie aufgefasst werden. Im Folgenden soll unter dem Begriff Sammelschiene eine einzelne Sammelschiene oder auch ein Sammelschienensystem verstanden werden. Schaltfelder mit eingehenden Leitungen werden auch Einspeisefelder genannt. Analog werden Schaltfelder mit abgehenden Leitungen auch als Abgangsfelder bezeichnet.

Durch die Betriebsspannungen dieser Anlagen sind zum Schutz des menschlichen Lebens, der Anlage sowie der Umgebung bzw. der Infrastruktur entsprechende Vorsichtsmaßnahmen zu ergreifen. Mithin sind verschiedene Schutzsysteme in diesen Anlagen integriert, um kritische oder gefährliche Betriebs- oder Anlagenzustände zu erkennen und den entsprechenden Anlagenteil oder auch die gesamte Anlage abzuschalten.

Infolge derartiger kritischer oder gefährlicher Betriebszustände droht die Entstehung von Lichtbögen, auch Störlichtbögen genannt. Ein solcher Lichtbogen entsteht beispielsweise bei einem Kurzschluss, d.h. bei einer unbeabsichtigten Verbindung zwischen zwei spannungsführenden Leitern, oder auch bei einem Erdschluss, d.h. bei einer unbeabsichtigten Verbindung zwischen einem spannungsführenden Leiter und einem auf Erdpotential befindlichen, zumeist metallischen Leiter. Im Folgenden wird dies als Fehler bezeichnet Bei solchen Fehlern wird eine großer Betrag an Energie um- bzw. freigesetzt, sodass es zu einer schweren Schädigung der Anlage selber, aber auch an der umgebenden Infrastruktur kommen kann. Im schlimmsten Fall ist, wie bereits erwähnt, auch von einer Gefährdung von Leib und Leben des Betriebspersonals auszugehen. Hierbei hängt der umgesetzte Energiebetrag insbesondere von der Stromstärke sowie von der Dauer des Lichtbogens bis zu seiner Löschung ab.

Solche Anlagenfehler können durch Verschmutzungen und/ oder sich niederschlagende Feuchtigkeit, aber auch durch atmosphärische Veränderungen oder Ablagerungen, Eindringen von Gegenständen und Tieren oder tierischen Abfallprodukten verursacht werden. Derartige Vorgänge sind nicht völlig auszuschließen. Es gilt daher also der Entstehung von derartigen schweren Fehlern vorzubeugen, den Fehler zu erkennen oder bei einem auftretenden Fehler die Anlage oder den fehlerbehafteten Teil der Anlage abzuschalten, um somit Schäden an der Anlage zu minimieren und zu verhindern.

Ein Schutzsystem für eine elektrotechnische Anlage ist beispielsweise aus der DE 199 61 267 A1 bekannt. Bereits vor der Entstehung eines stromstarken Stödichtbogens kann es an der fehlerbehafteten Stelle durch chemische Reaktionen zu einer Veränderung des Widerstandes und mithin zu stromschwachen Lichtbögen kommen. Solche Lichtbögen sind zunächst vergleichsweise unkritisch, da der Strom nahezu ungehindert weiter fließen kann. Zur Erkennung dieser schwachen aber indikativen Störlichtbögen werden Frequenzüberwachungssysteme eingesetzt, die Veränderungen in der Oberschwingung von Strom und/ oder Spannung erkennen. Damit kann der Entstehung eines starken Störlichtbogens vorgebeugt werden.

Diese bekannten Systeme haben den Nachteil, dass das Schutzsystem den fehlerbehafteten Tell der Anlage oder die Anlage selbst erst dann abschaltet, wenn ein Fehler bereits aufgetreten und dadurch erst durch das entsprechende Schutzsystem erkannt worden ist. Somit kann es bereits zu kleineren Schäden an der Anlage gekommen sein, die vor einer Wiederinbetriebnahme der Anlage behoben werden müssen. Dies führt zu längeren Ausfallzeiten und ist kosten- und zeitintenslv.

Vor diesem Hintergrund ist es die Aufgabe der vorliegende Erfindung eine elektrotechnische Anlage, insbesondere eine Nieder- oder Mittelspannungsschaltanlage, und ein Verfahren zum Betrieb derselben aufzuzeigen, die über ein Überwachungs- und Schutzsystem verfügt, welches bereits mögliche Fehler frühest möglich erkennt und geeignete Gegenmaßnahmen einleitet.

Die Lösung dieser Aufgabe gelingt durch die Merkmale des Vorrichtungsanspruchs 1 sowie des Verfahrensanspruchs 13. Vorteilhafte Ausführungsformen und Weiterbildungen sind in den Unteransprüchen beschrieben.

Erfindungsgemäß kommt ein Überwarhungs- und Schutzsystem in elektrotechnischen Anlagen, insbesondere in einer Nieder- oder Mitelspannungsschaltanlage zum Einsatz, welche wenigstens ein Schaltfeld aufweiset, wobei die Anlage wenigstens eine Sammelschiene mit mindestens einem Schaltgerät aufweist.

Ferner weist das Überwachungs- und Schutzsystem wenigstens einen diesem Schaltfeld zugeordneten Sensor zur qualitativen und/ oder quantitativen Erfassung von elektrischen und/ oder nicht-elektrischen Parameter des Schaltfelds der elektrotechnischen Anlage auf. Vorzugsweise wird eine Mehrzahl von Sensoren eingesetzt, die auch außerhalb des Schaltfeldes und auch außerhalb der Anlage angeordnet sein können. Im Folgenden umfasst der Begriff Sensor einen oder eine Mehrzahl an Sensoren. Als elektrische und nicht-elektrische Parameter können belspielsweise die elektrische Stromstärke, der Anstieg oder der Gradient der elektrischen Stromstärke, Überspannungen, Strahlungsemissionen in Folge von Lichtbögen innerhalb des Schaltfelds, Bewegungen innerhalb des Schaltfelds, die Abnahme des Isolationsvermögens bzw. der Durchschlagsfestigkeit, die Temperatur in der Schaltanlage oder der Umgebung, Feuchte, Betauung sowie Vibrationen und Erschütterungen erfasst werden. Hierbei ist es denkbar, dass eine Vielzahl verschiedener einzelner Sensoren eingesetzt wird, sodass eine Mehrzahl der vorgenannten Parameter ermittelt werden können.

Das Überwachungs- und Schutzsystem weist zudem eine dem Schaltfeld oder der elektrotechnischen Anlage zugeordnete und mit dem Sensor verbundene Auswerteeinheit zur Verarbeitung der erfassten elektrischen und/ oder nicht-elektrischen Parameter und ein dem Schaltfeld oder der elektrotechnischen Anlage zugeordnetes und mit der Auswerteeinheit verbundenes Schaltgerät zur Abschaltung des Schaltfeldes bei kritische Anlagenzuständen auf. Als Schaltgerät kann insbesondere ein Leistungsschalter, eine Sicherung oder ein Lastschalter verwendet werden.

Ferner weist das Überwachungs- und Schutzsystem einen dem Schaltfeld oder der elektrotechnischen Anlage zugeordneten und mit der Auswerteeinheit verbundenen Schnellschalter zur Abschaltung des Schaltfeldes bei extrem kritischen Anlagenzuständen auf. Eine Abschaltung kann also je nach Schwere der zu erwartenden Fehlerauswirkungen durch das Schaltgerät oder durch den Schnellschalter erfolgen, wobei das Schaltgerät nach Auslösung des Schnellschalters ebenfalls geschaltet werden kann.

Hierbei soll unter einem kritischen Anlagezustand, ein Zustand verstanden werden, bei welchem es zu einer Lichtbogenentwicklung sowie zu schweren Schäden an der elektratechnischen Anlage und zu einer Gefahr für die Gesundheit und/ oder Leben des Betriebspersonals kommen kann. Die von den Sensoren ermittelten Werte liegen außerhalb eines definierbaren Grenzbereiches, welcher in der Regel ein geringes Vielfaches des Nennstroms beträgt.

Im Gegensatz hierzu ist unter einem extrem kritischer Anlagenzustand, ein Zustand zu verstehen, bei dem es ebenfalls zu einer Lichtbogenentwicklung sowie zu besonders schweren Schäden an der elektrotechnischen Anlage kommen kann - wie beispielsweise einer vollständigen Zerstörung - und auch eine erhebliche Gefahr für die Gesundheit und/ oder das Leben des Betriebspersonals kommen kann. Hierbei liegen die von den Sensoren ermittelten Werte außerhalb eines weiteren definierbaren Grenzbereichs, wobei dieser in der Regel ein hohes Vielfaches des Nennstroms beträgt.

Der beschriebene Sensor wird zweckmäßigerweise so angeordnet, dass besonders verschmutzungsanfällige oder feuchtigkeitssensible Bereiche des Schaltfelds und/ oder der elektrotechnischen Anlage abdeckt werden. Das sind insbesondere Bereiche in denen mit verstärktem Eindringen von Gegenständen, Schmutzpartikeln und Tieren oder auch erhöhter Deposition von Feuchtigkeit und Schmutz zu rechnen ist. Mit anderen Worten sind es also jene Bereiche der Anlage, bei denen durch Ablagerungen von Kleinst- und Kleintellen sowie durch niederschlagende Feuchtigkeit Fehlerquellen vermehrt entstehen. Durch die einhergehende Verschmutzung, und auch durch Feuchtigkeit die sich auf dem wenigstens einen Sensor niederschlägt, entsteht eine Schicht, was wiederum zu einer Veränderung der Betriebsbedingungen des Sensors führt.

Dieser Sensor detektiert somit unter anderem eine Fremdschichtbildung und ist grundsätzlich zur Überwachung der aus den Normen bekannten Kriechstrecken geeignet.

Dabei ist vorteilhaft, wenn ein Sensor so angeordnet wird, dass besonders kritische Bereiche der Anlage und/ oder des Schaltfelds überwacht werden. Als kritische Bereich versteht man unter anderem jedweden Bereich der Anlage, bei dem das Auftreten eines Fehlers zu besonders langen Ausfallzeiten, verstärktem Reparaturaufwand, hohen Kosten zu erwarten sind oder dessen Ausfall oder Fehlerhaftigkeit auch eine besondere Gefahr für die menschliche Gesundheit oder das menschliche Leben darstellt.

Vorzugsweise kann der Sensor im Betriebszustand des Schaltfelds zumindest zeitweilig mit einer elektrischen Spannung beaufschlagt werden. Es ist denkbar, den Sensor dauerhaft mit einer elektrischen Spannung zu beaufschlagen, oder auch intermittierend, um beispielsweise den Energieverbrauch zu reduzieren. Ferner ist es denkbar, die Abstände zwischen der Beaufschlagung mit einer elektrischen Spannung nicht konstant, sondern variabel zu halten. Als Spannungungsform zur Beaufschlagung des Sensors kann eine Gleichspannung, eine Wechselspannung oder eine Impulsspannung verwendet werden.

Die elektrische Spannung kann bedarfsweise über eine Fremspannungsversorgung bereitgestellt werden. Somit ist die elektrische Spannung von dem zu überwachenden Kreis bzw. Schaltfeld entkoppelt und kann damit unabhängig von der Betriebsspannung des zu überwachenden Schaltfeldes bereitgestellt werden. Mithin ist es auch bei einer Abschaltung des Schaltfeldes möglich, Teile des Überwachungs- und Schutzsystems oder das Überwachungs- und Schutzsystem als Ganzes weiterhin zu überwachen.

Zweckmäßigerweise wird die elektrische Spannung an den Enden des jeweiligen Sensors angelegt. Der Sensor ist also so aufgebaut, dass dieser an zwei Seiten eine Aufnahme, beispielsweise eine Stecker-, Klemm- oder Schraubverbindung aufweist. Denkbar ist, dass diese Verbindung so ausgeführt wird, dass ein schneller Wechsel oder Tausch der Sensoren, insbesondere im Falle eines Defektes möglich ist.

Vorzugsweise wird der Sensor aus einem isolierenden Material aufgebaut. Als Material ist beispielsweise der Einsatz von Thermoplasten, Duroplasten, Keramik, Glas oder dergleichen denkbar. In einer bevorzugten Ausführungsform weist der Sensor eine Fläche auf und ist somit insbesondere in Form einer Isolierplatte ausgeführt. Denkbar ist aber auch eine andere geometrische Formgebung, wie eine Zylinder-, Halbzylinder-, Stab-, oder Kreisform sowie profilierte Bereiche, beispielsweise mit Wellen- oder Zackenprofil zur Aufnahme von Schmutzpartikeln und Feuchtigkeit.

Es ist von Vorteil, wenn der Sensor zusätzlich eine Veränderung der Fremdschichtleitfähigkeit und das lsolationsvermögen der die spannungsführenden Leitern umgebenen Atmosphäre erfassen kann. Diese Parameter können beispielsweise über eine Elektrodenanordnung erfasst werden. Bei ungekapselten Anlagen wird die umgebende Atmosphäre von Luft gebildet, bei gekapselten Anlagen üblicherweise von Schwefelhexafluorid SF₆. Es ist aber auch denkbar, dass andere Gasgemische oder Gase die umgebende Atmosphäre bilden können. Es ist auch denkbar, dass ein Sensor nur eine Elektrodenanordnung, also keine zusätzliche Isolierplatte oder dergleichen aufweist. Auf diese Weise detektiert dieser Sensor zusätzlich die die elektrische Durchschlagsfestigkeit der umgebenden Luft und eignet sich somit zusätzlich zur Überwachung der Luftstrecke.

Vorleilhafterweise wird für den Sensor der Stromfluss innerhalb eines Sensors durch die Auswerteeinheit erfasst. Insbesondere kann der Stromfluss entweder als sensorbezogener Einzelstromfluss oder als Summenstromfluss über wenigstens zwei Sensoren erfasst werden. Denkbar ist auch, dass der Summenstromfluss erst in der Auswerteeinheit gebildet wird. Es ist aber auch denkbar, die Leitungen bzw. Verbindungen zwischen den Sensoren und der Auswerteeinheit derart zu gestalten, dass sich ein Einzel- oder Summenfluss zwangsläufig ergibt. Beispielsweise können zwei Verbindungen zweier Sensoren gebündelt werden, womit einen Summenstromfluss über genau diese zwei Sensoren entsteht. Denkbar ist auch, dass die Sensoren sowohl einen Spannungsmesswert als auch einen Messwert der Stromstärke liefern.

Des Weiteren ist es von Vorteil, wenn wenigstens ein zusätzlicher Sensor nicht-elektrische Parameter erfasst. Dies können beispielsweise physikalische, akustische oder optische Parameter sein, welche beispielsweise mittels Temperatur- Feuchtigkeits-, Stromanstiegs- oder Überspannungssensoren erfasst werden können.

Zweckmäßigerweise weist das Überwachungs- und Schutzsystem einen Datenspeicher auf, wobei der Datenspeicher vorzugsweise der Auswerteeinheit zugeordnet ist. Dieser Datenspeicher kann als externe Komponente ausgeführt sein, oder ein integraler Bestandteil der Auswerteeinheit sein. Vorzugsweise ist der Datenspeicher als persistenter Speicher ausgebildet. Solche Speicher werden auch als Festspeicher oder nichtflüchtiger Speicher bezeichnet. Persistente Speicher haben den Vorteil, dass gespeicherte Informationen auch ohne Stromversorgung erhalten bleiben.

Bevorzugt werden die von der Auswerteeinheit des Überwachungs- und Schutzsystems ermittelten Parameter, insbesondere der Stromfluss, in den Datenspeicher geschrieben, Somit ergibt sich aus der Messfrequenz sowie der Anzahl der Sensoren ein Anforderungsprofil des Datenspeichers bezüglich der Schreib- und Lesezeiten sowie der Kapazität des Datenspeichers, Um wenig Kapazität vorhalten zu müssen, ist es denkbar, dass Daten die für keine weitere Verarbeitung mehr notwendig sind überschrieben werden.

Zweckmäßigerweise kann die Auswerteeinheit einen Trend In den gespeicherten Parametern analysieren. Hierzu kann die Auswerteeinheit auf die gespeicherten Werte zurückgreifen. Die Trendanalyse kann auf verschiedenen Algorithmen basieren, die wiederum auf verschiedene Parameter beruhen. Folglich kann ein einparametrischer wie auch ein mehrparametrischer Trend ermittelt werden. Dieser Trend kann insbesondere zur Kalibrierung der Anlage herangezogen werden,

Ferner ist es von Vorteil, wenn die Auswerteeinheit die aktuell erfassten Parameter, also die Ist-Werte, mit wenigstens einem trendbereinigten Soll-Wert bzw. -Parameter vergleicht. Wenn die Abweichung zwischen dem aktuell erfasstem Parameter und dem Soll-Wert außerhalb einer Toleranz liegt, also ein Über- oder Unterschreiten des Soll-Wertes erfolgt, kann die Auswerteeinheit ein Signal, beispielsweise ein Alarmsignal und/oder ein Auslösesignal generieren bzw. emittieren.

Zweckmäßigerweise ist der wenigstens eine Soll-Wert in Form eines Soll-Messwertes definierbar, dh, parametrierbar. Hierzu kann der Soll-Wert als feste Größe oder auch als variable Größe definiert werden, wobei in beiden Fällen die Möglichkeit zur Trendbereinigung besteht. Denkbar ist auch, dass zwei Soll-Werte definiert werden, sodass es einen oberen und einen unteren Soll-Wert gibt, wobei der obere und untere Soll-Wert gemeinsam einen Grenzwertkorridor bilden Dies hat den Vorteil, dass sich der Ist-Wert mit gewissen Schwankungen in diesem Korridor bewegen kann, ohne dass diese Schwankungen als kritisch anzusehen sind, Dennoch ist es denkbar, dass bei derartigen Fluktuationen ein Warnsignal emittiert wird, welches bspw. zur zeitnahen Wartung der Anlage mahnt.

Ferner kann es vorteilhaft sein, auch eine Toleranz, also den Abweichungsbetrag zwischen Ist- und Soll-Wert zu definieren. Es ist denkbar, dass die Toleranz als feste oder auch als variable Größe definiert wird. Beispielsweise kann so der Tag-/ Nacht-Rhythmus, der zu einer variablen Toleranz führt, da sich unterschiedllche Temperaturen und Feuchtigkeitssituationen ergeben.

Es ist von Vorteil, wenn das Überwachungs- und Schutzsystem über eine von der Netzspannung unabhängige Spannungsversorgung verfügt. Das Überwachungs- und Schutzsystem ist also fremdspannungsversorgt, um auch bei einem Stromausfall weiterhin Daten erheben, verarbeiten und speichern zu können. Folglich bleibt auch die Möglichkeit einer Trendanalyse, wie weiter oben beschrieben, bei einem Stromausfall erhalten,

Während des Betriebs analysiert die Auswerteeinheit die von den Sensoren, d.h. von den konventionellen ebenso wie von den beschriebenen Sensoren, eingehenden Signale. Im Falle eines ungestörten Betriebs werden keine Maßnahmen eingeleitet. Wird der Betriebszustand von der Auswertereinheit als kritisch bzw. extrem kritisch eingestuft, wird je nach Schwere der Störung entweder eine Warnmeldung ausgelöst, die lokal oder an eine übergeordnete Leittechnik erfolgen kann, und/ oder es wird das Schaltgerät der Anlage ausgelöst oder aber es wird der Schnellschalter ausgelöst, um in kürzest möglicher Zeit die Energiezufuhr in die Schaltanlage zu unterbrechen. Dieser Schnellschalter kann sowohl als Öffner als auch als Schließer ausgeführt sein. Denkbar ist die Ausführung auf Basis mechanischer oder leistungselektroniscfer Komponenten.

Zweckmäßigerweise ist der Schnellschalter der elektrotechnischen Anlage in Energieflussrichtung gesehen hinter dem Schaltgerät angeordnet. Des Weiteren ist der Schnellschalter bevorzugt in einem Einspeisefeld bzw. in jedem Einspeisefeld der Anlage montiert. Bei Bedarf kann ein Schnellschalter aber auch in einem Abgangsfeld angeordnet sein.

Die Zweckmäßigkeit der Anordnung des Schnellschalters in Energieflüssrichtung gesehen hinter dem Schaltgerät stellt sich wie folgt dar. Als kritische Stelle bei einem Fehler gilt im Allgemeinen das Einspeisefeld bzw. die Einspelsefelder, und insbesondere die Stelle an welcher die Leitung in das Feld führt. Wird im Fehlerfall der Schnellschalter ausgelöst, so kann zeitgleich auch das Auslösesignal an das vorgeordnete Schaltgerät übermittelt werden. Dies ist deshalb sinnvoll, da der Schnellschalter für geringere Leistungen ausgelegt ist als das Schaltgerät. Der Schnellschalter bewirkt dann innerhalb weniger Millisekunden die Unterbrechung der Energiezufuhr des Schaltfelds. Das vorgeordnete Schaltgerät benötigt dagegen eine Öffnungszeit von mehren 10 ms, in der Regel ungefähr 60 ms. Bei Auslösen des Schnellschalters kommt es daher in der Fehlerstelle zu einem Stromfluss von nur wenigen Millisekunden. Würde stattdessen nur ein Schaltgerät zum Einsatz kommen, würde eine erhebliche längere Zeit von bis zu 60 ms bis zur Abschaltung vergehen. Dies würde weitaus schwerwiegendere Folgen für die Anlage, für die die Anlage umgebende Infrastruktur sowie für sich in der Nähe befindliche Personen bedeuten.

Das Vorschalten des Schnelischalters in Energieflussrichtung gesehen vor dem Schaltgerät ist unvorteilhaft. Bei einem extrem kritischen Anlagenzustand - und damit einer Unterbrechung der Stromversorgung durch den Schnellschalter - wirkt die volle Last zunächst auf den Schnellschalter, welche mehrere Megawatt betragen kann (gemäß der elektrischen Leistung P = I² × R), Dadurch kann es zu einer nicht hinreichenden Unterbrechung der Stromversorgung kommen bzw. Spitzenlasten im Schnellschalter auftreten, die auch zu einer Überbrückung desselben führen können, Folglich kommt es zu größeren Beschädigungen an der Anlage und zu einer erhöhten Brandgefahr im Bereich des Schnellschalters.

Somit wird durch die erfindungsgemäße Anordnung des Schnellschalters in Energieflussrichtung gesehen hinter dem Schaltgerät der Energleumsatz bzw. die auftretende Belastung im Schnellschalter begrenzt, da die Stromflussdauer im Schnellschalter durch das sich öffnende Schaltgerät begrenzt wird. Dies hat den Vorteil, dass der Strom zu Null - und somit auch die Leistung zu Null - wird (P =I² x R = 0² × R = 0). Durch die begrenzte Momentanlelstung wird und somit auch die an der Anlage 1 auftretenden Schäden bzw. die Gefahr für das Betriebspersonal erheblich gemindert.

Es ist von Vorteil, wenn das Überwachungs- und Schutzsystem modular aufgebaut ist, wobei der wenigstens eine Sensor, die Auswerteeinheit, das Schaltgetät und der wenigstens eine Schnellschalter als voneinander separate Module bzw. Komponenten/ Betriebsmittel ausgebildet sind. Bei einem modularen Aufbau kann bei Ausfall oder Defekt einer einzelnen Komponente diese schnell ausgetauscht werden, was besonders beim Einsatz von Einweg-Komponenten vorteilhaft ist,

Zweckmäßigerweise ist die Verbindung zwischen den Modulen des Überwachungs- und Schutzsystems leitungsgebunden ausgebildet. Denkbar ist, dass die Leitungen als gängige Signalübertragungsleitungen ausgeführt sind, beispielsweise in Kupfer- oder Glasfaserausführung. Des Weiteren kann es vorteilhaft sein, die Verbindung zwischen den Modulen durch Steckerverbindungen, beispielsweise in Form von Modularsteckerverbindungen, auszuführen. Somit können die Komponenten schnell ausgetauscht werden.

Alternativ kann die Verbindung zwischen den Modulen des Überwachungs- und Schutzsystem leitungsungebunden ausgeführt sein. Hierbei kann auf gängige Funkverbindungen und -protokolle zurückgegriffen werden, wie sie beispielsweise im WPAN- oder auch im WLAN-Bereich eingesetzt werden. Denkbar ist auch, dass eine Kombination von leitungsgebundenen und leltungsungebundenen Verbindungen Verwendung findet.

Ferner ist es von Vorteil, wenn der Schnellschalter und/ oder das Schaltgerät über das Auslösesignal auslösbar sind. Bevorzugt ist dem Schaltfeld die Energiezufuhr durch Auslösung des Schnellschalters und/ oder des Schaltgeräts in kurzer Zeit entziehbar.

Zweckmäßigerweise kommt hierbei ein leistungselektronischer Schnellschalter zum Einsatz. Dieser Schnellschalter kann im Fall einer Auslösung zerstörbar sein. Dadurch ist gewährleistet, dass dem Schaltfeld die Energiezufuhr rasch entzogen wird. Mithin können Schäden an der Anlage vermieden werden.

Des Weiteren kommt erfindungsgemäß ein Verfahren zum Betrieb eines Überwachungs- und Schutzsystems zum Einsatz in elektrotechnischen Anlagen, insbesondere in Nieder- und Mittelspannungsschaltanlagen, zum Einsatz. Die Anlage weist dabei wenigstens ein Schaltfeld mit wenigstens einer Sammelschiene auf. Das Überwachungs- und Schutzsystem kann ferner mindestens einen dem Schaltfeld zugeordneten Sensor zur Erfassung der elektrischen und/ oder nicht-elektrischen Parameter des Schaltfelds der elektrotechnischen Anlage, eine dem Schaltfeld zugeordnete und mit dem Sensor verbundene Auswerteeinheit zur Verarbeitung der erfassten elektrischen und/ oder nicht-elektrischen Parameter, ein dem Schaltfeld zugeordnetes und mit der Auswerteeinheit verbundenes Schaltgerät zur Abschaltung des Schaltfeldes bei kritischen Anlagezuständen sowie einen Schnellschalter zur Abschaltung des Schaltfeldes bei extrem kritischen Anlagenzuständen aufweisen. Das erfindungsgemäße Verfahren ist dabei gekennzeichnet durch folgende Verfahrensschritte:
a) Definieren des Wertes oder eines Grenzwertkorridors für wenigstens einen Soll-Wert in der Auswerteeinheit;
b) Erfassen des Ist-Werts des Sensors während des Betriebs des Schaltfelds der elektrotechnischen Anlage durch die Auswerteeinheit;
c) Abgleich des lst-Werts des Sensors mit dem Soll-Wert oder dem Grenzwertkorridor durch die Auswerteeinheit;
d) Detektierung eines sich anbahnenden oder eingetretenen kritischen Anlagenzustandes in Abhängigkeit des Abgleichs des Ist-Werts des Sensors mit dem Soll-Wert oder dem Grenzwertkorridor;
e) Emittierung eines Signals durch die Auswerteeinheit als Alarmsignal und/oder als Auslösesignal an das Schaltgerät und/oder den Schnellschalter;
f) Abschalten des Schaltfeldes durch Auslösen des Schaltgerätes bei einem kritischen Anlagenzustand; oder
g) Auslösen des Schnellschalters bei einem extrem kritischen Anlagenzustand.

In der Regel wird das Schaltgerät nach Auslösen des Schnellschalters ebenfalls ausgelöst. Somit kann der Anlage bei extrem kritischen Anlagezuständen zuerst schnell die Energiezufuhr entzogen werden.

Es ist von Vorteil, wenn eine elektrische Spannung, vorzugsweise eine Gleichspannung, Wechselspannung oder Impulsspannung, an wenigstens einen Sensor während des Betriebs des Schaltfelds der elektrotechnischen Anlage angelegt wird. Die elektrische Spannung kann dauerhaft oder auch zeitweilig, also intermittierend, am Sensor angelegt werden. Hierbei können der Stromfluss und/ oder die Spannung als Parameter erfasst werden.

Besonders vorteilhaft ist es, wenn dem Schaltfeld die Energiezufuhr in kurzer Zeit entzogen wird, Bei einer derart schnellen Unterbrechung der Energieversorgung sind die entstehenden Schäden, sofern überhaupt welche entstanden sind, gering.

Dies kann durch eine schnelle Öffnung des Stromkreises auf Grundlage mechanischer Komponenten erfolgen. Dabei wird durch eine extrem schnelle Unterbrechung der Energiezufuhr Im Falle eines extrem kritischen Anlagenzustand das Schadensausmaß weitestgehend reduziert.

Alternativ ist die Unterbrechung der Energiezufuhr mit einem Schnelischalter auf Basis leistungselektronischer Komponenten möglich. Grundsätzlich geeignete leistungselektronische Komponenten auf Thyristorbasis oder auf IGBT- bzw. IGCT-Basis sind aus der Literatur heraus bereits bekannt. Eine wirtschaftliche Nutzung wird durch den damit verbundenen hohen Kühlungsaufwand erschwert. Eine reversible, d.h. ohne Zerstörung der Halbleiter funktionierende Schaltung, erfordert große und teure Halbleiter, weshalb in der vorliegenden Variante der leistungsetektronische Schalter im Falle der Auslösung zerstört werden darf. Für die elektrotechnische Anlage bedeutet dies, dass bereits nach kurzer Überprüfung und ggf. einer Reinigung des Schaltfelds eine Zuschaltung wieder erfolgen kann.

Nachfolgend wird die Erfindung anhand von in den Figuren dargestellten Ausführungsbeispielen näher erläutert. Darin zeigen:
- Fig. 1: eine schematische Darstellung von Schaltfeldern mit einem erfindungsgemäßen Überwachungs- und Schutzsystems;
- Fig. 2: eine schematische Darstellung zu möglichen Ausführungen des Sensors bzw. der Sensoren des erfindungsgemäßen Überwachungs- und Schutzsystems;
- Fig. 3: eine schematische Darstellung der Auswerteeinheit des erfindungsgemäßen Überwachungsund Schutzsystems für den Anschluss der Sensoren;
- Fig. 4: eine beispielhafte Darstellung typischer Signalformen für Strom und Spannung, welche als Detektionskriterium für die Ausgabe eines Signals dienen;
- Fig. 5: eine schematische Darstellung eines im Fehlerfall öffnenden Schnellschalters des erfindungsgemäßen Überwachungs- und Schutzsystems; und
- Fig. 6: eine schematische Darstellung eines im Fehlerfalls kurzschließenden Schnellschalters des erfindungsgemäßen Überwachungs- und Schutzsystems.

Gleiche Teile, Betriebsmittel oder Komponenten sind in den Figuren mit identischen Bezugszeichen versehen.

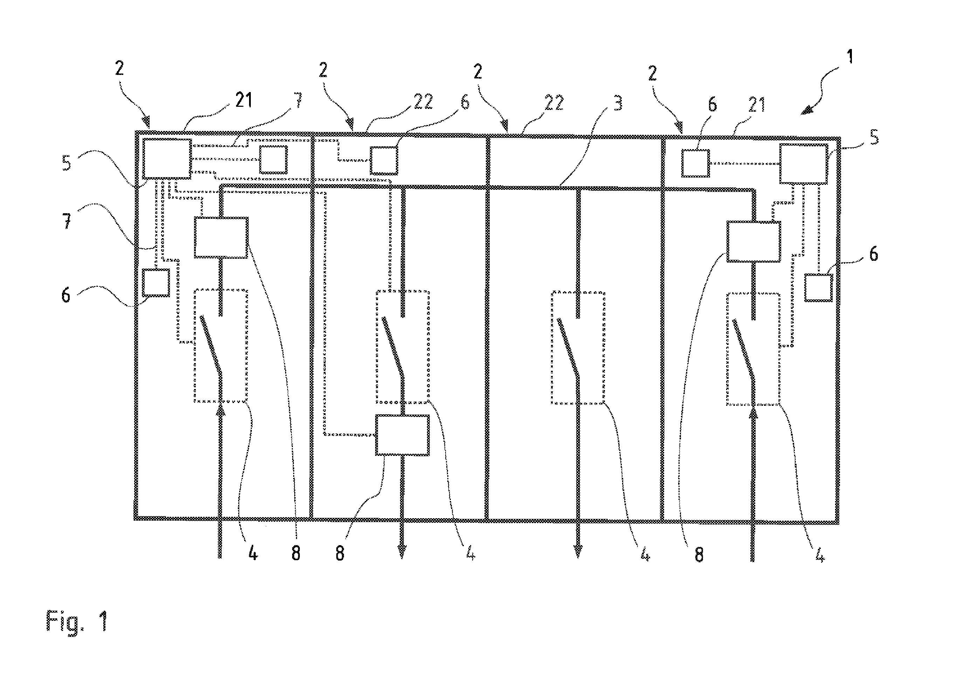

Fig. 1 zeigt eine schematische Darstellung einer elektrotechnischen Anlage 1, insbesondere einer Nieder- oder Mittelspannungsschaltanlage. Die dargestellte Anlage 1 umfasst vier Schaltfelder 2 und eine Sammelschiene 3. Der hier dargestellte Aufbau zeigt zwei Einspeisefelder 21 (durch den in das Schaltfeld gerichteten Pfeil dargestellt) sowie zwei Abgangsfelder 22 (durch den aus dem Schaltfeld gerichteten Pfeil dargestelft).

Jedes der Schaltfelder 2 weist ein ihm zugeordnetes Schaltgerät 44 (auf.. Weiterhin zeigt Fig. 1 jeweils einem Einspeisefeld 21zugeordnete Auswerteeinheit 5, die mit einer Vielzahl an Sensoren 6 über Steuerleitungen 7 verknüpft ist, Ferner sind den Schaltgeräten 4 der beiden Einspeisefelder 21 sowie dem Schaltgerät 4 eines Abgangsfelds 22 jeweils ein Schnellschalter 8 zugeordnet, wobei die Schnellschalter 8 in Energieflussrichtung gesehen hinter den Schaltgeräten 4 angeordnet sind.

Die Sensoren 6 sind so in den Schaltfeldern 2, 21, 22 angeordnet, dass Stellen überwacht werden, die unter dem Aspekt der Verschmutzung und des Feuchtigkeitsniederschlags als besonders gefährdet zu betrachten sind, oder Stellen,wo im Falle des Versagens der Isolationsfähigkeit die Folgen als besonders schwer einzustufen sind.

Einige Sensoren 6 des modularen Überwachungs- und Schutzsystems können so direkt elektrische Parameter wie beispielsweise Stromstärke und Überspannungen ermitteln. Des Weiteren können einige Sensoren 6 so angeordnet sein, dass Umgebungsparameter wie Temperatur und/ oder Feuchte gemessen werden. Je nach Anwendung werden also verschiedene Sensoren 6 innerhalb und auch außerhalb der Anlage1 angeordnet. Denkbar ist auch, dass ein Sensor 6 mehr als einen Parameter ermittelt, also beispielsweise Temperatur und Feuchte von einem Sensor 6 gemessen wird.

Die Messwerte werden dann über eine Verbindung 7, hier über die Steuerleitungen 7, zur Auswerteeinheit 5 übertragen. Erfindungsgemäß kann diese Verbindung auch leitungsungebunden sein. Die Schaltgeräte 4 und Schnellschalter 8 sind ebenfalls über Steuerleitungen 7 mit der entsprechenden Auswerteinheit 5 verbunden, wobei der Schnellschalter 8 des Abgangsfelds 22 mit der Auswerteeinheit 5 verbunden ist, welche räumlich näher liegt, also in diesem Beispiel mit der Auswerteinheit 5 des linken Einspeisefelds 21.

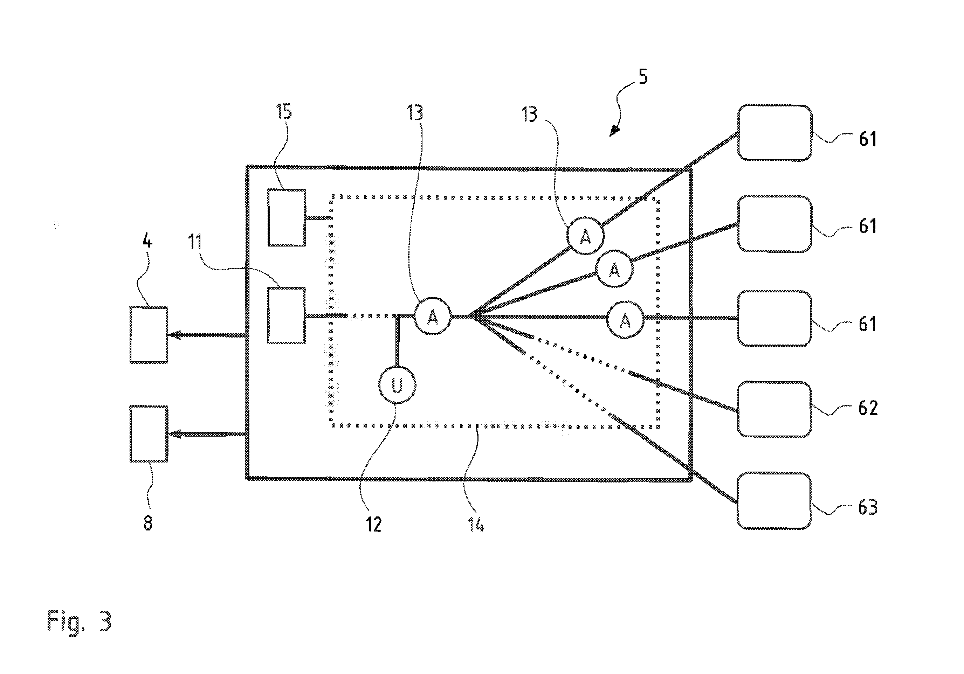

In der Auswerteeinheit 5 werden dann die ermittelten Daten erfasst, überwacht, verarbeitet und gespeichert. Hierzu verfügt die Auswerteeinheit 5 über einen Messwertauswertesystem mit einem Datenspeicher 15, wie in Fig. 3 näher gezeigt. Die gemessenen Werte können sowohl als Rohdaten wie auch als verrechnete Daten gespeichert werden.

Die Auswerteeinheit 5 erfasst wenigstens einen ist-Wert bspw den ist-Stromfluss bzw. die ist-Spannung und/ oder die ist-Stromstärke der Sensoren 6 und vergleicht diese mit einem hinterlegten und definierten Soll-Wert, also beispielsweise einer hinterlegten und definierten Soll-Spannung bzw. Soll-Stromstärke, wobei es denkbar ist, dass die Soll-Werte 0 V bzw. 0 A betragen.

Auf Basis der gespeicherten Daten und der aktuell erhobenen Messwerte kann die Auswerteeinheit 5 Abweichungen im Anlagenzustand der Anlage 1 bereits frühzeitig erkennen. Bei geringen Abweichungen, kann die Auswerteinheit 5 eine Warnmeldung an ein übergeordnetes Leit- oder Wachsystem, bspw. einen Leitstand, abgeben,

Bei Erkennen eines kritischen Anlagenzustands der Ablage 1 durch die Auswerteinheit 5 wird ein Signal an das entsprechende Schaltgerät 4 des betroffenen Schaltfeldes 2, 21, 22 gesersdet. Sollte die Auswertehheit 5 einen extrem kritischen Anlagzustand der Anlage 1 erkennen, so wird ein Auslösebefehl an das entsprechende Schaltgerät 4 und den entsprechenden Schnellschalter 8 geschickt. Durch Auslösen des Schnellschalters 8 wird dem Schaltfeld 2, 21, 22 die Energiezufuhr in wenigen Millisekunden entzogen. Erfindungsgetnäß wird nach Auslösen eines Schnellschalters 8 das dem Schnellschalter 8 vorgeschaltete Schaltgerät 4 ausgelöst, da das Schaltgerät 4 insgesamt langsame reagiert als der Schnellschalter 8.

Mithin ist es also möglich, je nach Art und Schwere des auftretenden oder zu erwartenden Fehlers entweder lediglich eine Warnmeldung abzugeben und/oder das Schaltgerät 4 bzw. den Schnellschalter 8 auszulösen.

In der gesamten Anlage 1 kann eine einzelne Auswerteeinheit 5 eingesetzt werden, wobei es auch möglich ist, mehrere Auswerleeinheiten 5 einzusetzen, wie dies auch in Fig. 1 gezeigt ist. Hierbei kann es auch als vorteilhaft angesehen werden, wenn beim Einsatz mehrerer Auswerteeinheiten 5 eine Verbindung zwischen diesen besteht. Dies ist insbesondere dann vorteilhaft, wenn es - wie dargestellt - mehrere Einspeisefelder 21 gibt. Sollte in einem dieser Einspeisefelder 21 ein kritischer oder extrem kritischer Zustand durch die entsprechende Auswerteeinheit 5 erkannt werden, so kann diese Information auch an die Auswerteinheit 5 eines anderen Einspeisefelds 21 übertragen werden und so die Stromzufuhr für die gesamte Anlage 1 unterbrochen werden. Die Verbindung wird zum Datenaustausch genutzt und kann als leitungsgebundene oder leitungsungebundene Steuerleitung 7 ausgeführt sein.

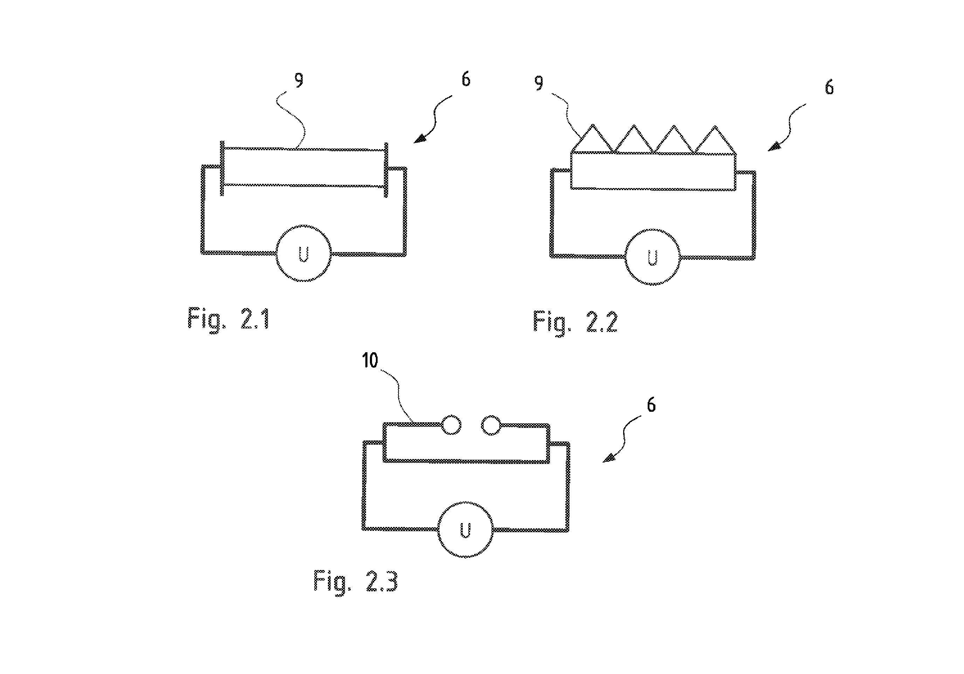

Fig. 2 zeigt schematisch drei beispielhafte Ausführungen eines Sensors 6 des erfindungsgemäßen Überwachungs- und Schutzsystems. Die in Fig. 2.1 und 2.2 dargestellten Sensoren 6 sind aus isolierendem Material aufgebaut. In Fig. 2.1 ist der Sensorkörper 9 des Sensors 6 flächig in Form einer Isolierplatte ausgeführt. Fig, 2.2 zeigt einen Sensor 6 mit einem Sensorkörper 9 der in Form eines an der oberen Seite gewellten bzw. gezackten Körpers ausgeführt. Generell ist jede Form als Sensorkörper 9 geeignet, die eine Verschmutzung durch entsprechende Deposition der Schmutzpartikel bzw. Feuchtigkeitsniederschlag ermöglicht. Somit ist es auch zweckmäßig, die Sensoren 6 so anzuordnen, dass Schmutz auf Ihnen liegenbleibt und nicht schwerkraftbedingt abrutscht. Auch ist es nicht vorteilhaft besonders hydrophobes Material zu wählen, da dies zur Tropfenbildung und folglich zum Ablauf der niedergeschlagenen Feuchtigkeit führen würde.

Wie in Fig. 2.1 und 2.2 dargestellt kann an beiden Enden des Sensorkörpers 9 eine definierte Spannung bzw. Stromstärke angelegt werden. Die Spannung bzw. Stromstärke wird gemessen und an die Auswerteeinheit übertragen. Diese Spannung bzw. Stromstärke kann dauerhaft oder - beispielsweise zur Reduzierung des Energiebedarfs - zeitweilig auf die Sensoren 6 aufgeschaltet werden. Mit zunehmender Verschmutzung und unter Einfluss der Feuchtigkeit bildet sich eine leitfähige Schicht auf dem Sensor 6 die zu einer veränderten Leitfähigkeit führt.

Der in Fig. 2.3 dargestellte Sensor 6 weist eine Elektrodenanordnung10 auf, um die lsolationsfestigkeit bzw. Durchschlagsfestigkeit der umgebenden Atmosphäre zu überwachen. Die Atmosphäre ist insbesondere Luft bei ungekapselten Anlagen und SF₆ bei gekapselten Anlagen. Andere Gase und Gasgemische sind aber denkbar. Treten zwischen den Elektroden der Elektrodenanordnung 10 Entladungen auf, so wird dies als Zeichen für eine unzureichende oder abnehmende lsolationsfestigkeit der Atmosphäre betrachtet. Insbesondere bei gekapselten Anlagen ist dies ein Indiz für eine Undichtigkeit, da Luft mit geringer Durchschlagsfestigkeit in die Anlage eintritt und SF₆ mit höherer Durchschlagsfestigkeit verdünnt.

Nicht dargestellt, aber möglich ist auch eine Sensorkombination, wobei der Sensor 6 einen Sensorkörper 9 und eine Elektrodenanordnung 10 aufweist, um sowohl den Grad an Verschmutzung bzw. den Feuchtigkeitsniederschlag sowie die Isolationsfestigkeit der Atmosphäre zu überwachen.

In Fig. 3 ist eine erfrndungsgemäße Auswerteeinheit 5 dargestellt, die eine Spannungsquelle 11, ein Spannungsmessgerät 12 und eine Vielzahl an Strommessgeräten 13 umfasst Die Auswerteeinheit 5 ist mit mehreren Sensoren 61, 62, 63 verbunden. Die Sensoren 61, 62, 63 können sowohl erfindungsgemäße Sensoren 61 (wie in Fig. 3 dargestellt) sein, oder auch Sensoren zur Erfassung elektrischer und/ oder nicht-elektrischer Parameter sein. Beispielhaft sind hier ein Feuchtigkeitssensor 62 und ein Temperatursensor 63 dargestellt, Bei stromliefernden Sensoren wird der Strom sowohl als Einzelstrom durch die jeweils einer Verbindungsleitung zugeordneten Strommessgeräte 13, als auch als Summenstrom durch das zentrale Strommessgerät 13 erfasst. Die Spannungsquelle 11 agiert unabhängig von dem zu überwachenden Stromkreis, um auch bei einem Stromausfall bzw. nach Abschaltung der Anlage den Mess- und Überwachungsbetrieb aufrecht erhalten zu können. Sofern an den Sensoren 6 sensorbedingt Spannung angelegt ist, wird diese durch das Spannungsmessgerät 12 überwacht. Kommt es zu einem Einbruch der angelegten Spannung oder gar zu einem vollständigen Zusammenbruch der angelegten Spannung, so wird dies als Indiz für eine starke Verschmutzung bzw. zu hohe Feuchtigkeit gewertet und ein Warn- bzw. Auslösesignal wird emittiert. Die Auswerteeinheit 5 kann so ausgelegt sein, dass ein Signal erst emittiert wird, wenn mindestens zwei Sensoren 6 einen Einbruch oder Zusammenbruch der Spannung anzeigen.

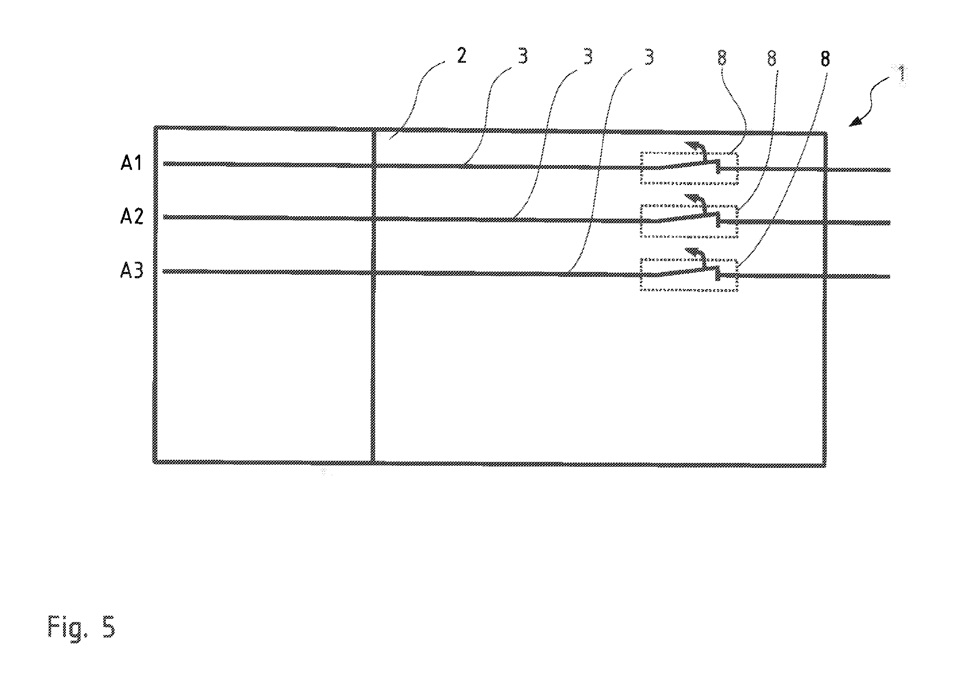

Ferner weist die Auswerteeinheit 5 zusätzlich ein Messwertauswertesystem 14 mit einem Datenspeicher 15 auf. Die von den Sensoren 6 erhobenen Daten, insbesondere der Strom und die Spannung wie in Fig. 5 dargestellt, werden kontinuierlich in den Datenspeicher 15 geschrieben. Das Messauswertesystem 14 kann auf diese gespeicherten Daten zurückgreifen und eine Trendanalyse vornehmen. Auf diese Weise kann auch ein "lernendes System" realisiert werden, welches beispielsweise während einer Lernphase sich selbst kalibriert und so erkennt, welche Schwankungen der Messparameter als unkritisch einzustufen sind und keine Signalemittierung bedingen.

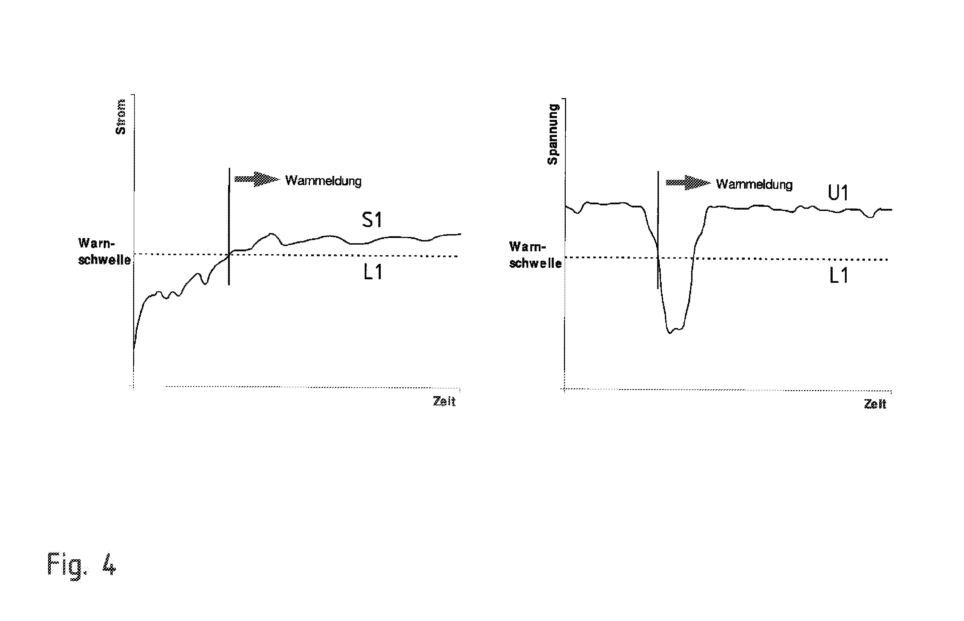

Fig. 4 zeigt typische Signalformen bei einem erfindungsgemäßen Sensor für den Strom S1 sowie für die Spannung U1, die zur Emittierung eines Signals führen. Die Zeit ist als unabhängiger Parameter an der Abszisse aufgetragen. Als abhängiger Parameter wird der Strom bzw. die Stromstärke (links) oder die Spannung (rechts) an der Ordinate aufgetragen. Die gestrichelte horizontal verlaufende Linie L1 zeigt eine Warnschwelle bzw. einen Grenzwert. Bei Über- bzw. Unterschreiten der Warnschwelle wird ein Warnmeldung bspw. ein Auslösesignal für einen Leistungsschalter emittiert. Die Warnschwelle ist definierbar. Denkbar ist auch, dass es einen Grenzwertkorridor, also eine obere und untere Warnschwelle gibt, in welchem sich der gemessene Parameter bewegen soll.

Die linke Abbildung in Fig. 4 zeigt einen typischen Zeitverlauf eines Stromsignals S1. Dieses Stromsignal S1 steigt schleichend über die Zeit an, bis der Grenzwert L1 überschritten wird. Folglich wird eine Warnmeldung emittiert. Der Grenzwert L1 kann auch so gewählt werden, dass der Anlagenzu_{~} stand noch deutlich von einem Fehler entfernt ist, jedoch die Reinigung der Anlage zur Betriebssicherheit notwendig wird und folglich angezeigt wird,

Die rechte Abbildung in Fig. 4 zeigt einen typischen zeitlichen Signalverlauf einer Spannung U1. Bei Einbruch der Spannung und Unterschreiten der Warnschwelle L1 wird ebenfalls ein Warnsignal emittiert. Die Warnschwelle L1 kann so gewählt sein, dass es noch nicht zu einem kritischen Anlagenzustand gekommen ist bzw. dass ein solcher nicht unmittelbar bevorsteht, aber eine Reinigung der Anlage zum Erhalt der Betriebssicherheit notwendig wird.

In Fig. 5 ist eine schematische Darstellung eines im Fehlerfall öffnenden Schnellschalters 8 eines erfindungsgemäßen Überwachungs- und Schutzsystems einer Nieder- oder Mittelspannungsschaltanlage 1 gezeigt. Die dargestellte Anlage 1 umfasst ein Schaltfeld 2 sowie drei parallele Sammelschienen A1, A2, A3 denen jeweils ein öffnender Schnellschalter 8 zugeordnet ist. In diesem Ausführungsbeispiel sind die öffnenden Schnellschalter 8 als Öffner dargestellt. D.h., dass bei entsprechendem Auslösesignal der Stromkreis in welchem der Fehler auftritt oder zu erwarten ist, innerhalb eines Zeitraums von wenigen Millisekunden geöffnet wird. Beispielsweise können die Schnellschalter 8 als mechanische Öffner ausgeführt sein, bei denen mittels geeigneter mechanischer Konstruktion die Schaltkontakte bei Auslösung sehr schnell auseinandergezogen werden können. Die Bewegung der Schaltkontakte kann beispielsweise durch eine vorgespannte Feder oder durch eine pyrotechnische Entladung oder auch durch Kombination mehrerer Antriebsmechanismen bewirkt werden. Aus Übersichtlichkeitsgründen wurde in Fig. 5 auf eine Darstellung der übrigen Komponenten bzw. Betriebsmittel verzichtet.

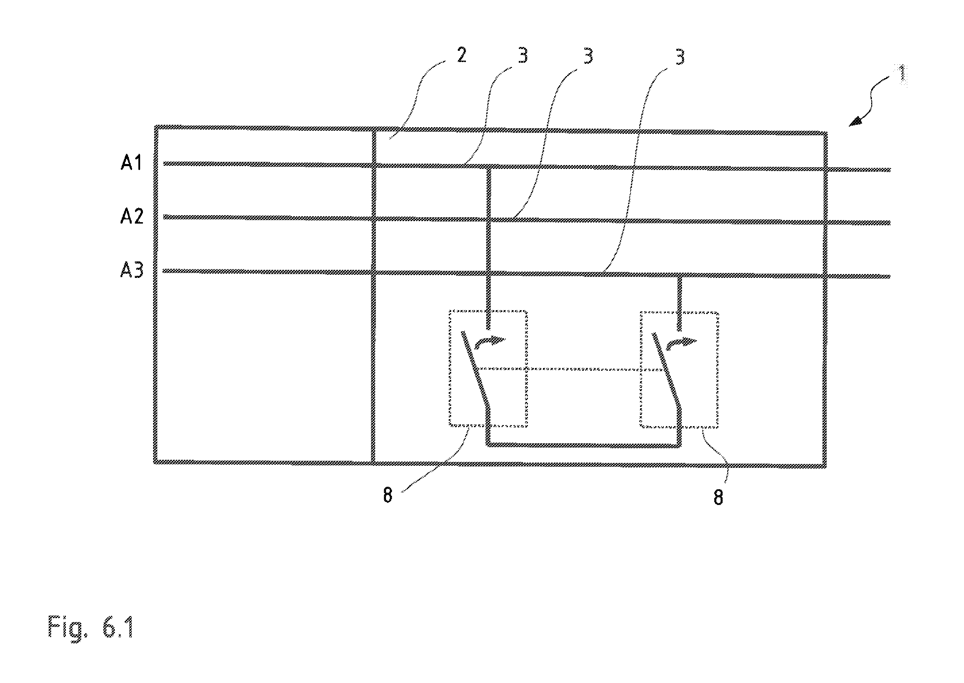

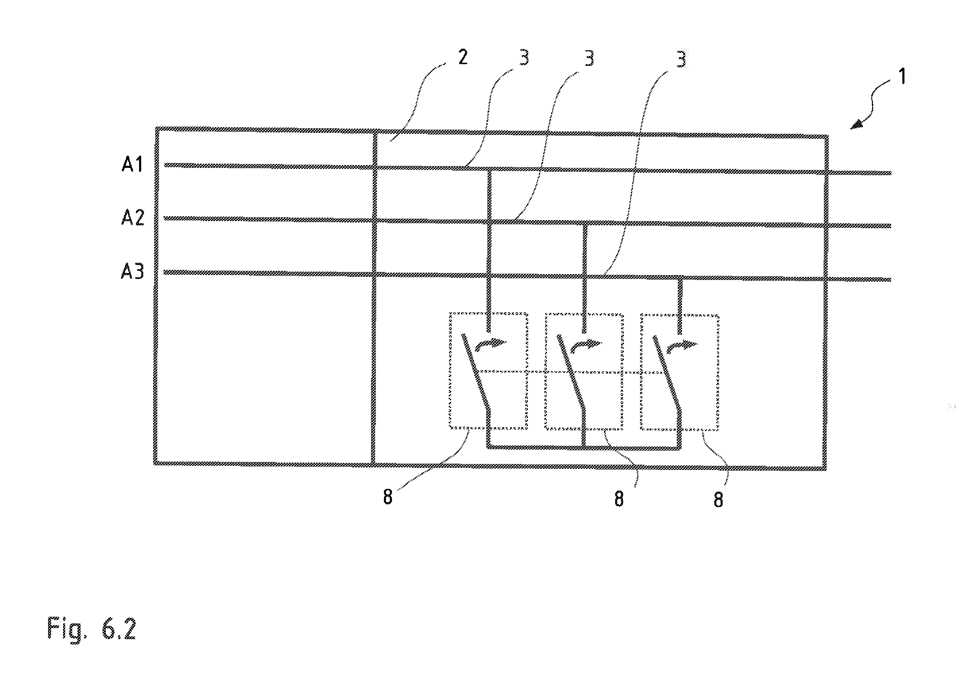

Fig. 6.1 und Fig. 6.2 zeigen eine schematische Darstellung eines im Fehlerfall schließenden Schnellschalters 8 eines erfindungsgemäßen Überwachungs- und Schutzsystems einer Nieder- oder Mittelspannungsschaltanlage 1. Analog zu der in Fig. 5 gezeigten Anlage umfasst die dargestellte Anlage 1 drei parallele Sammelschienen A1, A2, A2 , wobei den Sautlmelschienen A1 und A3 jeweils ein schließende Schnellschalter 8 zugeordnet ist (Fig. 6.1), bzw. allen Sammelschienen A1, A2, A3 ein Schnellschalter 8 zugeordnet ist (Fig. 6.2). Die in Fig. 6.1 und Fig. 6.2 dargestellten schließenden Schnellschalter 8 sind Schließer. D.h., dass durch Schießen der Schnellschalter 8 ein Kurz- oder Erdschluss erzeugt wird und dadurch der fehlerbehafteten Stelle bzw. der Stelle in der der Fehler zu erwarten ist, die Energiezufuhr innerhalb eines Zeitraums von wenigen Millisekunden entzogen wird. Beispielsweise können die Schnellschalter 8 als leistufigselektronische Kurzschließer ausgeführt sein. Hierbei führt die zusätzliche Öffnung des vorgeschalteten Schaltgeräts 4 dazu, dass die Zeitdauer und damit der Energieumsatz während der Kurzschlussdauer im Schnellschalter 8 begrenzt wird. Die Anordnung des leistungselektronisch kurzschließenden Schnellschalters 8 in Energieflussrichtung gesehen hinter dem Schaltgerät 4 begrenzt den Energieumsatz im Schriellschalter 8.

Aus Übersichtlichkeitsgründen wurde auf eine Darstellung der übrigen Komponenten bzw. Betriebsmittel verrichtet In dieser Variante kann es auch ausreichend seln, lediglich zwei Phasen mit einem Schalter zu versehen und diese im Bedarfsfall mit der dritten Phase zu verbinden.

### Bezugszeichenliste

- 1: elektrotechnische Anlage
- 2: Schaltfeld
- 21: Einspeisefeld
- 22: Abgangsfeld
- 3: Sammelschiene
- 4: Schaltgerät
- 5: Auswertereinheit
- 6: Sensor
- 61: Sensor
- 62: Feuchtigkeitssensor
- 63: Temperatursensor
- 7: Steuerleitung/ Verbindung
- 8: Schnellschalter
- 9: Sensorkörper
- 10: Elektrodenanordnung
- 11: Spannungsquelle
- 12: Spannungsmesserät
- 13: Strommessgerät
- 14: Messwertauswertesystem
- 15: Datenspreicher

- L1: Warnschwelle/ Grenzwert für Warnmeldung/ Auslösesignal
- S1: Signalform für den Strom
- U1: Signalform für die Spannung

- A1 - A3: parallel Sammelschienen

## Patentansprüche

1. Überwachungs- und Schutzsystem zum Einsatz in elektrotechnischen Anlagen (1), insbesondere in Nieder- und Mittelspannungsschaltanlagen, wobei die Anlage (1) wenigstens ein Schaltfeld (2, 21, 22) mit wenigstens einer Sammelschiene (3) aufweist, **dadurch gekennzeichnet, dass** das Überwachungs- und Schutzsystem
mindestens einen dem Schaltfeld (2, 21, 22) zugeordneten Sensor (6, 61, 62), vorzugsweise eine Mehrzahl an Sensoren (6, 61, 62), zur Erfassung der elektrischen und/ oder nicht-elektrischen Parameter des Schaftfelds (2, 21, 22) der elektrotechnischen Anlage (1),
eine dem Schaltfeld (2, 21 ,22) oder der elektrotechnischen Anlage (1) zugeordnete
und mit dem Sensor (6, 61, 62) verbundene Auswerteeinheit (5) zur Verarbeitung der erfassten elektrischen und/ oder nicht-elektrischen Parameter,
ein dem Schaltfeld (2, 21, 22) oder der elektrotechnischen Anlage (1) zugeordnetes
und mit der Auswerteeinheit (5) verbundenes Schaltgerät (4), und
einen dem Schaltfeld (2, 21, 22) oder der elektrotechnischen Anlage (1) zugeordneten
und mit der Auswerteeinheit (5) verbundenen Schnellschalter (8) aufweist.

2. Überwachungs- und Schutzsystem nach Anspruch 1, **dadurch gekennzeichnet, dass** der Schnellschalter (8) in Energieflussrichtung gesehen hinter dem Schaltgerät (4) angeordnet ist.

3. Überwachungs- und Schutzsystem nach der vorhergehenden Ansprüche, **dadurch gekennzeichnet, dass** wenigstens ein Sensor (6) im Betriebszustand zumindest zeitweilig mit einer elektrischen Spannung, welche bedarfsweise als Fremdspannungsversorgung ausgeführt sein kann, beaufschlagbar ist,

4. Überwachungs- und Schutzsystem nach einem der vorhergehenden Ansprüche, **dadurch gekennzeichnet, dass** ein Sensor (6) aus einem isolierenden Material aufgebaut ist

5. Überwachungs- und Schutzsystem nach einem der Vorhergehenden Ansprüche, **dadurch gekennzeichnet, dass** der Sensor (6) eine Veränderung der Fremdschichtleitfähigkeit und/ oder des Isolationsvermögens der die spannungsführenden Leiter umgebenden Atmosphäre, insbesondere Luft oder SF₆, erfassen kann.

6. Überwachungs- und Schutzsystem nach einem der Vorhergehenden Ansprüche, **dadurch gekennzeichnet, daas** der Sensor (6) eine zusätzliche Elektrodenanordnung (10) aufweist.

7. Überwachungs- und Schutzsystem nach einem der vorhergehenden Ansprüche, **dadurch gekennzeichnet, dass** der Stromfluss wenigstens eines Sensors (6) durch die Auswerteeinheit (5) vorzugsweise als sensorbezogener Einzelstromfluss oder als Summenstromfluss über wenigsten zwei Sensoren (6) erfassbar ist und die erfassten Daten kontinuierlich in einem Datenspeicher abgelegt werden können.

8. Überwachungs- und Schutzsystem nach Anspruch 7, **dadurch gekennzeichnet, dass** über die Auswerteeinheit (5) ein Trend In den gespeicherten Parametern analysierbar ist, welcher mit einem parametrierbaren Soll-Wert vergleichbar ist und bei dessen Über- bzw. Unterschreiten ein Alarmsignal und/oder ein Auslösesignal generiert werden kann.

9. Überwachungs- und Schutzsystem nach einem der vorhergehenden Ansprüche, **dadurch gekennzeichnet, dass** das Überwachungs- und Schutzsystem modular aufgebaut ist, wobei der wenigstens eine Sensor (6, 61, 62), die Auswerteeinheit (5), das Schaltgerät (4) und der wenigstens eine Schneilscharter (8) als voneinander separate Module ausgebildet sind.

10. Überwachungs- und Schutzsystem nach Anspruch 9, **dadurch gekennzeichnet, dass** die Verbindung (7) zwischen den Modulen des Überwachungs- und Schutzsystems leitungsgebunden und/oder leitungsungeburiden ausgebildet ist.

11. Überwachungs- und Schutzsystem nach einem der vorhergehenden Ansprüche, **dadurch gekennzeichnet, dass** das Schaltgerät (4) und/oder der Schnellschalter (8) über das Auslösesignal auslösbar sind.

12. Verfahren zum Betrieb eines Überwachungs- und Schutzsystem zum Einsatz in elektrotechnischen Anlagen (1), insbesondere in Nieder- und Mittelspannungsschaltanlagen, wobei die Anlage (1) wenigstens ein Schaltfeld (2, 21, 22) mit wenigstens einer Sammelschiene (3) aufweist, wobei das Überwachungs- und Schutzsystem mindestens einen dem Schaltfeld (2, 21, 22) zugeordneten Sensor (6, 61, 62) zur Erfassung der elektrischen und/ oder nicht-elektrischen Parameter des Schaltfelds (2, 21, 22) der elektrotechnischer, Anlage (1), eine dem Schaltfeld (2, 21, 22) zugeordnete und mit dem Sensor (6, 61, 62) verbundene Auswerteeinheit (5) zur Verarbeitung der erfassten elektrischen und/ oder nicht-elektrischen Parameter und ein dem Schaltfeld (2, 21, 22) zugeordnetes und mit der Auswerteeinheit (5) verbundenes Schaltgerät (4) und einen Schnellschalter (8) aufweist, **gekennzeichnet durch** folgende Verfahrensschritte:
a) Definieren eines Wertes für wenigstens einen Soll-Wert oder eines Grenzwertkorridors in der Auswerteeinheit (5);
b) Erfassen des Ist-Wertes des Sensors (6, 61, 62) während des Betriebs des Schaltfelds (2, 21, 22) der elektrotechnischen Anlage (1) **durch** die Auswerteeinheit (5);
c) Abgleich des Ist-Werts mit dem Soll-Wert oder dem Grenzwertkorridor **durch** die Auswerteeinheit (5);
d) Detektierung eines sich anbahnenden oder eingetretenen kritische oder extrem kritischen Anlagenzustandes in Abhängigkeit des Abgleichs des Ist-Wertes mit dem Soll-Wert oder dem Grenzwertkorridor;
e) Emittierung eines Signals **durch** die Auswerteeinheit (5) als Alarmsignal und/ oder als Auslösesignal an das Schaltgerät (4) und/ oder den Schnellschalter (8); und
f) Abschalten des Schaltfeldes (2, 21, 22) **durch** Auslösen des Schaltgeräts (4) bei einem kritischen Anlagenzustand, oder
g) Abschalten des Schaltfeldes (2, 21, 22) **durch** Auslösen des Schnellschalters (8) bei einem extrem kritischen Anlagenzustand:

13. Verfahren nach Anspruch 12, wobei in Schritt g) das Schaltgerät (4) nach Auslösen des Schnellschalters (8) ausgelöst wird.

14. Verfahren nach Anspruch 12 oder 13, wobei in Schritt b) eine dauerhafte oder zeitweilige elektrische Spannung, vorzugsweise eine Gleichspannung, Wechselspannung oder Impulsspannung, an wenigstens einen Sensor (6) während des Betriebs des Schaltfelds (2, 21, 22) der elektrotechnischen Anlage (1) angelegt wird,

15. Verfahren nach Anspruch 14, wobei der Stromfluss und/ oder die Spannung als Parameter erfasst werden.

16. Verfahren nach einem der vorhergehenden Ansprüche 12 bis 15, wobei in Schritt b) wenigstens ein Sensor (61, 62) nicht-efektrische Parameter erfasst.

17. Verfahren nach einem der vorhergehenden Ansprüche 12 bis 16, wobei in Schritt b) die erfassten Parameter in der Auswerteinheit (5) gespeichert werden und aus den gespeicherten Daten einen Trend, insbesondere zur Kalibrierung des Überwachungs- und Schutzsystems analysierbar ist.

18. Verfahren nach Anspruch 17, wobei die Auswerteeinheit den Soll-Wert und/ oder der Grenzwortkorridor um den Trend bereinigt und bei Überschreitung des definierten Soll-Werts das Signal gemäß Schritt e) emittiert wird.

19. Verfahren nach einem der vorhergehenden Ansprüche 12 bis 18, wobei in Schritt d) bei Einbruch oder Zusammenbruch des Ist-Werts das Signal gemäß Schritt e) emittiert wird.

20. Verfahren nach einem der vorhergehenden Ansprüche 12 bis 19, wobei in Schritt b) zusätzlich eine Überwachung der Isolationsfestigkeit der umgebenden Atmosphäre, insbesondere Luft oder SF₈, durch eine zusätzliche Elektrodenanordnung (10) des Sensors (6) erfolgt.
